# EUROPEAN PATENT SPECIFICATION

(11) **EP 2 229 669 B1**
(45) Date of publication and mention of the grant of the patent: **18.04.2012**
(21) Application number: 08847595.9
(22) Date of filing: 29.10.2008
(51) Int. Cl.: G09B 19/24

(54) **ARC WELDING SIMULATOR**
BOGENSCHWEISSSIMULATOR
SIMULATEUR DE SOUDAGE À L'ARC

(30) Priority: 05.11.2007 GB 0721676
(43) Date of publication of application: 22.09.2010
(73) Proprietor: The Validation Centre (TVC) Limited, Norfolk NR31 0NH (GB)
(72) Inventor: HASTINGS, Kim Peter, Great Yarmouth Norfolk NR31 0NH (GB); CATHLES, Christopher John, Great Yarmouth Norfolk NR31 0NH (GB)
(74) Representative: ip21 Ltd
(86) International application number: PCT/GB2008/051010
(87) International publication number: WO 2009/060231

(56) References cited:
- FR-A- 2 827 066
- US-A- 3 867 769
- US-A- 4 689 021
- US-A- 4 931 018
- US-A- 5 823 785

## Description

### Field of the Invention

The invention relates to arc welding simulators.

### Problems to be solved

There is currently a shortage of trained welders. Means need to be found to train would-be welders more quickly and efficiently, in order that the welding trade may flourish through the introduction of a new generation of welders and that industries involving welders need not suffer from a lack of welding skill amongst their respective workforces.

Traditionally, the teaching of welding has been difficult. The difficulties in teaching welding stem from the nature of welding itself. First, the bright lights, fumes and loud noises created by a welding station in operation tend to militate against communication between teacher and pupil; talking is very difficult, because of the noise and fumes generated by the welding task itself and the fact that both teacher and pupil are wearing facemasks. Meanwhile, visual communication is rendered more difficult by both mask and gear, and is further ill-advised; people holding welding equipment should not be encouraged to gesticulate, because it may harm others.

Welding simulators are known. They are useful for three reasons. First, they avoid the dangers associated with training using large electrical currents, high temperatures and dangerous fumes. Second, a simulator potentially produces a variety of costs savings, notably in relation to the provision of real welding kit, the large amounts of electricity required to power it, and the large number of different consumables, such as electrodes, shielding gas, and the pieces of base metal on which to practice. Third, in cutting out the fumes (which will often require the use of a respirator), noise, and darkness caused by the need to wear a helmet, there is more potential for interaction between teacher and pupil. Simulation therefore makes learning quicker.

There is therefore much to recommend welding simulators as a teaching aid.

It is unfortunate then that welding simulators thus far have such marked shortcomings. First, they tend to employ computer screens to simulate the welding environment, and thus lack realism. Welding simulations, in which one pilots a virtual welder around a virtual world, or even those in which the student actually holds a simulated welding rod in relation to a flat screen, do not realistically simulate welding to as great an extent as would be desirable, and this limits their value for teaching purposes, and perhaps also their credibility amongst students. Flat, screen-based technology cannot, by definition recreate the three dimensional experience of the different types of weld which welders need to undertake every day.

In addition, some simulators are bound by an expensive workbench design. Given that welding is a process undertaken in a variety of hostile environments and in a variety of body positions, the workbench concept fails to capture the essence of the task of welding and as such has educational value only at a very basic level.

It is an aim of this invention to attempt a solution to these and other problems.

The closest prior art is FR2827066 (ASS NATIONALE POUR LA FORMATIO). It comprises a training system that has a tool (20) which is displaced by the operator, a display (10) which can be displaced (12) to serve as the work piece, a detector (30) sensing displacement of the tool relative to the display, and a computer (40) connected to the detector generating an image of the work piece in response to movements of the tool. The prior art does not disclose:
- That the welding rod has a first magnet at one end;
- That the work-piece is of non-magnetic material and comprises a second magnet;
- That one of the magnets is an electromagnet;
- That the sensor is to detect the proximity of the end of the welding rod; and
- That the controller is adapted to function the way it is defined in claim one.

With regard to a work-piece on its own, document US4124944 (BLAIR) represents the closest prior art disclosing as it does, a work-piece with a magnetic sensor and means for detecting the proximity of a welding rod to a simulated surface.

### Summary of the Invention

In a first broad, independent aspect, the invention provides an arc welding simulator, comprising a simulated welding rod, the rod having a first magnet at or towards one end, a simulated work-piece comprising a non-magnetic representation of an object to be welded, and one or more second magnets located at or along a point, or track, of intended weld simulation, at least one of said first and second magnets being an electromagnet, a sensor to detect the proximity of the end of the simulated welding rod to a surface of the simulated work-piece and a controller in communication with the sensor and the or each electromagnet, and which receives information from the sensor about the proximity of the simulated welding rod to the simulated work-piece, and adjusts the field strength and/or polarity of the electromagnet in accordance with a predefined relationship between said proximity and said magnetic characteristics of the field strength and/or polarity, thereby giving tactical feedback to a user.

This new and inventive solution completely does away with the use of computer screens in the interface between student-user and welding simulator. Instead of controlling a virtual welder, or pointing a mock-up of a welding kit at a screen, the student-user is working with a realistic simulated welding rod, at a work-piece designed to look like a real work-piece. The increased realism creates a better learning environment for students and allows them to reach a level of skill at which they may start to use the real welding equipment proficiently and safely more quickly.

The use of an electromagnet allows for the generation of static pulsed or oscillating magnetic fields of particular frequencies, which may be frequencies mimicking those of the electric currents used for actual welding, thus enhancing realism.

The potential for a polarity shift at a given point, perhaps particularly close to the work-piece, further enhances the realism of the simulation, since it simulates the user getting the electrode stuck to the base metal of the work-piece.

Using a work-piece at all gives the potential to create a variety of physical scenarios that go beyond the limited parameters offered by a workbench.

The implementation of a simulated work-piece and sensors allows for the user to practice in three dimensions, and be accordingly assessed following the processing and presentation of the sensor data.

The use of tactile feedback in this welding simulator allows the user to really get the feel for welding, rather than rely on visual cues as with other simulators. This is particularly important, because in a real welding environment, visual and auditory information is obscured by the smoke, noise and flashing light generated by the process itself, as well as the need to wear a protective mask with a darkened visor while doing the job.

In a first subsidiary aspect, the controller is equipped with a number of modes, each mode corresponding with a different relationship between the proximity of the simulated welding rod to the simulated work-piece and field strength and/or polarity exhibited by the electromagnet.

Having several modes makes the welding training simulator a more flexible training aid, since different levels of field strength and/or polarity can be used to simulate welding using different techniques, different materials of electrodes and different materials of base metals.

Alternatively, such variations can be used to create unrealistic situations, such as very strong attraction or repulsion, or irregular pulsing, or rapidly changing conditions of attraction and repulsion, which nonetheless allow the user to develop skills of manual strength and dexterity useful in welding.

In a second subsidiary aspect, the sensor comprises means to detect the position of the simulated welding rod parallel to a surface of the simulated work-piece.

This allows the sensor to be used in a precise manner in plotting the position of the simulated welding rod. This is useful in the provision of appropriate tactile feedback during the simulation and in the provision of useful data for critical and educational use when the simulation has finished. Most importantly, this also allows monitoring of the progress of the electrode across the work-piece, allowing the calculation of heat input per unit length of the weld.

In a third subsidiary aspect, the sensor comprises one or more sensors of magnetism.

The sensing of magnetism may be preferable in plotting the movement of the simulated welding rod in relation to the simulated work-piece because it allows for the accurate plotting of the course of the magnet in the rod. This is preferable to the use of motion sensors, which may detect movements other than that of the rod itself, which will skew the data provided. Further precision may be garnered from the use of magnetic sensors in embodiments of the invention where a magnet is at the tip of the rod. Since the proximity of the tip to the simulated work-piece is of paramount importance in the simulation, the accurate tracking of the movement of the tip by following its magnetic field is of particular advantage.

In a fourth subsidiary aspect, the sensor comprises one or more Hall Effect sensors.

Hall Effect sensors allow the simulator to ascertain the location of an object by the strength of its magnetic field. Thus, there is no need for supplementary location sensors. The Hall Effect sensors would be particularly appropriate sensors for use in magnetic tracking.

In a fifth subsidiary aspect, the said second magnet is set in or below an indentation in the work-piece.

The provision of an indentation more accurately simulates a joint which requires welding together.

In a sixth subsidiary aspect, the dimensions of the indentation are variable.

The adjustment of the indentation would allow for a better simulation of different types of weld.

In a seventh subsidiary aspect, the work-piece is made, at least in part, of a flexible material.

The provision of a portion of flexible material will allow for the work-piece to be shaped to resemble different types of weld.

This is particularly advantageous in that a flexible work-piece may be better located in unusual positions in an environment, thus allowing flexibility in the simulation of "awkward to reach" welds which, notably, the workbench style simulator would not be able to recreate.

A similar advantage of flexibility is that the work-piece may be deformed into, or wrapped around, a curved surface such as a pipe.

In an eighth subsidiary aspect, the invention further comprises means for storing data gathered from the sensor, and processing means for defining one or more periods of time as one or more simulations and deriving one or more of the following data sets in relation to that period: the proximity of the end of the simulated welding rod with respect to the simulated work-piece during the simulation; the arc current that would have been achieved in a corresponding arc welding apparatus; the arc voltage that would have been achieved in a corresponding arc welding apparatus; the velocity of the end of the simulated welding rod with respect to the simulated work-piece during the simulation; the energy input that would have been achieved in a corresponding arc welding apparatus.

This is advantageous in that the production of one or more data sets allows for the analysis of performances. This allows the user to spot mistakes or bad technique, which will be useful in aiding the user to become a better welder. The use of such data for marking by a teacher is also envisaged. This simulator provides a good way of testing a student user, because the data it creates is done so automatically and therefore the conditions are the same for each student taking the test. Testing using this simulation may be considered a more objective way of marking a simulated weld than the impressions and observations of one or more observers.

In a ninth subsidiary aspect, the simulated welding rod is telescopic.

This is advantageous in that a telescopic rod may be used to simulate a consumable electrode of the sort used in Stick or MIG welding. The rate at which the consumable electrode is fed into the welding site is of importance to the strength of the weld, and it is important that the student welder has the opportunity to practice feeding the electrode into the weld at the correct speed and in the correct manner. Thus this feature further enhances the realism of the simulator.

By providing a simulation of the consumable electrode, the welding simulator removes, at least partially, the need for a student to practice with a real electrode. The dangers of sustaining injury in this part of the training are avoided and the costs of supplying the consumable electrode are also saved.

In a tenth subsidiary aspect, the simulated welding rod further comprises an inclinometer.

The provision of an inclinometer will allow for the monitoring and / or the production of data relating to the angle at which the simulating welding rod is held. There is a desirable angle at which to hold a welding rod, and this can be analysed and corrected through the use and observation of said inclinometer.

In a second independent aspect, the invention provides a simulated work-piece comprising a non-magnetic representation of an object to be welded, and one or more magnets located at or along a point, or track, of intended weld simulation and a sensor to detect the proximity of the end of a simulated welding rod to a surface of the simulated work-piece.

The provision of separate work-pieces allows for the cost-effective diversification of the simulator through the provision of a range of said work-pieces.

Also included within the scope of the invention is an arc-welding simulator substantially as described herein, with reference to and as illustrated by any appropriate combination of the accompanying drawings.

Also included within the scope of the invention is a simulated work-piece substantially as described herein, with reference to and as illustrated by any appropriate combination of the accompanying drawings.

### Brief description of the figures

The invention will be described with reference to the accompanying drawings, in which:
Figure 1 is a diagrammatic perspective view of an arc welding simulator.
Figure 2 is a diagrammatic plan view of a simulated work-piece.
Figure 3 is a diagrammatic cross-sectional side view of a simulated work-piece.
Figure 4 is a diagrammatic cross-sectional side view of a further simulated work-piece.
Figure 5 is a diagrammatic cross-sectional side view of a still further simulated work-piece.
Figure 6 is a diagrammatic perspective view of a simulated work-piece and a simulated welding rod.
Figure 7 is a graph illustrating one relationship of magnetic field strength to electrode-work-piece proximity.
Figure 8 is a side view of a telescopic welding rod.
Figure 9 is a side view of a further telescopic welding rod.
Figure 10 is a side view of a still further telescopic welding rod.

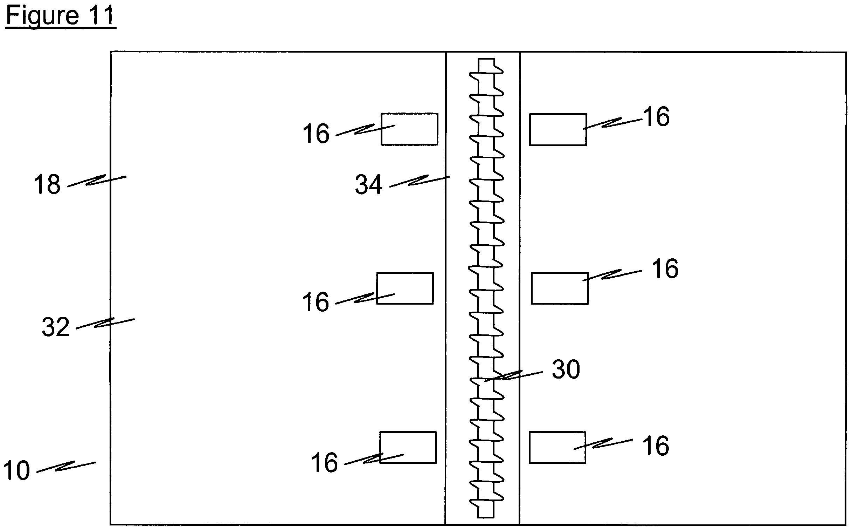

Figure 11 is a plan view of a still further simulated work-piece.

### Detailed description of the figures

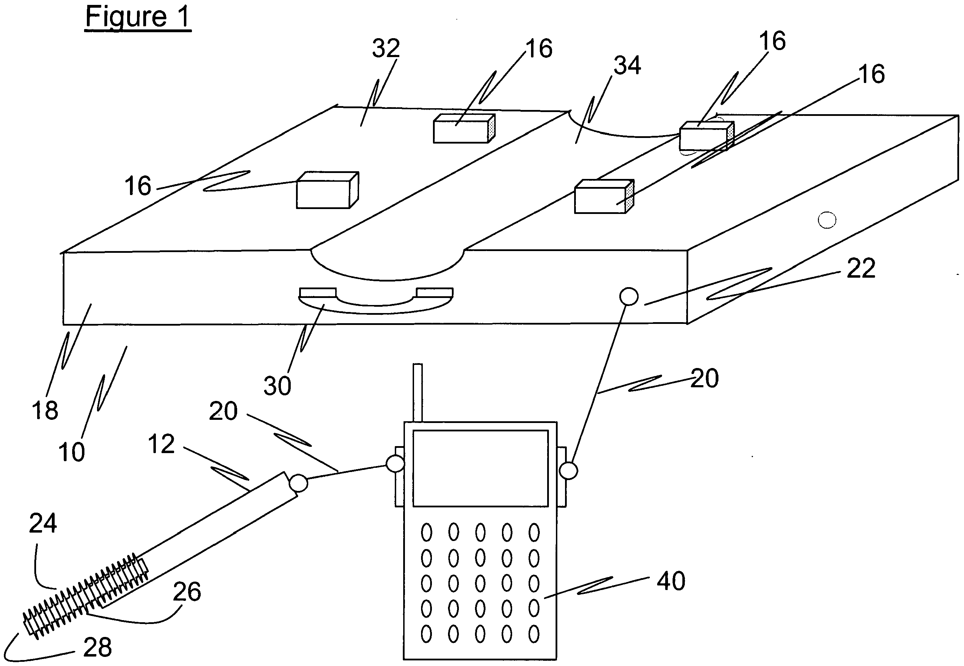

Figure 1 shows an arc welding simulator, indicated generally at 10. The arc welding simulator 10 comprises a simulated welding rod ("rod") 12. The rod 12 is designed to simulate a given type of actual welding rod, and ought to do so as a matter of design, in terms of look and feel. In some embodiments, it is desirable to make the rod 12 out of non-ferrous metal, to prevent interference with the data produced by the sensor 16.

A wireless connection between the rod 12 and some or all of the other components of the welding simulator 10 is possible, but a preferred embodiment, such as that shown in figure 1, has the rod 12 connected to the controller 40, and the controller 40 connected to a simulated work-piece ("work-piece") 18, by means of a cable 20. In this embodiment, each cable 20 terminates has a plug 22 of a known sort at each end. The provision of plugs provides that rods 12, work-pieces 18 and controllers 40 may be interchanged. The equipping of embodiments with one or more cables 20 of varying lengths is advantageous in that they can be used to limit movement in a manner which realistically simulates real welding kit.

In this embodiment, the rod 12 has a magnet 24 at one of its ends. In alternative embodiments, it may be located close to the end. This magnet 24 may be either a permanent magnet or an electromagnet. If the magnet 24 is a permanent magnet, it will be of a known type such as, for example, a rare earth magnet.

If the magnet 24 is an electromagnet, as here, it will be of a known configuration, such as a simple coil, or a coil 26 wrapped around a core 28. The core 28 may be made of any ferrous metal, although ferrite and carbon steel are particularly favoured. The most favoured substance for the composition of the core 28 is a material called Permendur 49 ®, which is advantageous in this setting because it has a lower saturation point than Carbon Steel. The coil 26 will be made of any material known to the skilled man.

A power source (not shown) provides the electricity on demand. Advantageously, the power source could be a battery pack, which would allow for increased portability of the welding training simulator.

Advantageously, the electromagnet may be placed, as here, in the simulated welding rod 12. This has a marked advantage over placing it in the work-piece 18, namely that the operation of this arc welding simulator 10 involves varying of the power of the electromagnet, whether the electromagnet is the magnet 24 in the rod 12, or it is the second magnet 30 in the work-piece 18. If the electromagnet is placed in the work-piece 18, it will be more likely to interfere with the sensor 16, especially if the sensor 16 in question senses magnetism, because said sensor 16 will be positioned close to the fluctuating electromagnet, which may further affect its ability to detect or distinguish other magnetic sources. Given that the positioning of the rod 12 and the magnet 24 is, as will be shown, a key factor to be measured by the sensor 16, it is the case that the very fluctuations in the power of a magnet 24 where that magnet 24 is part of the rod 12 may make it more visible to the sensor16, whereas changes in an electromagnet embedded in a work-piece 18 may actually interfere with the calibration of the sensor 16. Thus, it may be useful to put the permanent magnet 24 in or on the work-piece 18, and calibrate the sensor 16 accordingly.

This embodiment of the invention further comprises a simulated work-piece 18. The work-piece 18 shown here is of a simple sort, comprising as it does a body 32 with an indentation 34 made in it. The body 32 may be made of any appropriate material, typically plastics. It is advantageous to use materials which are not magnetic so they do not interfere with the sensing of the first 24 and second 30 magnets by the sensors 16.

The body 32 may be so fashioned as to simulate a fillet joint, a square butt joint, a single-V preparation joint, a lap joint, a T joint or any other joint known to the man skilled in the art. As such it may be deformable, or made of more than one component. It may also be fashioned so as to be capable of arrangement as a curve, in order that the welding of a pipe may be simulated.

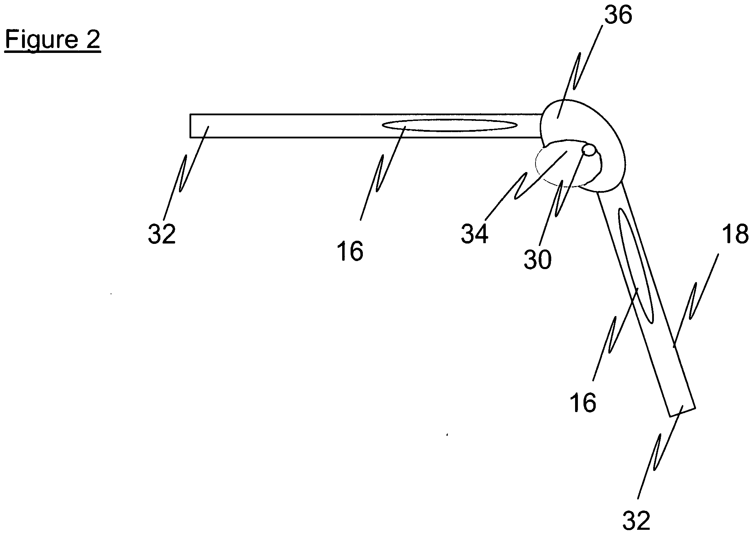

In this embodiment, the second magnet 30, which is a permanent magnet, is set below an indentation 34 in the work-piece 18. In alternative embodiments, it will be set in the indentation 34. In this embodiment, the indentation is a straight track, which would be of use to help the user learn to weld in a straight line, at a constant rate. Alternative configurations of indentations such as curved tracks and apertures are envisaged, as are combinations of indentations. Alternatively, as shown in figure 2, in some embodiments of the work-piece 18 the dimensions of the indentation 34 may be variable. In the aforementioned figure, the work-piece 18 is fitted with a hinge 36 in the indentation 34. This has the added advantage of allowing for the work-piece 18 to be folded about the hinge 36 for compact storage.

Alternatively, the material of the work-piece 18 may be flexible. This would allow it to be displayed from unusual angles, or to be wrapped around a cylindrical object, such as a pipe.

Returning to figure 1, Arc welding simulator 10 also features a sensor 16, which here comprises two arrays of two Hall Effect sensors. These are so arranged as sense all magnetic fields within 5cm of the work-piece 18. Other magnetic or non-magnetic sensors may be used, but Hall Effect sensors are particularly useful in this context because not only do they measure given magnetic forces, but they can also be used to work out the proximity and location of a magnet, such as magnet 24 in rod 12 which is brought into their vicinity and / or a chosen surface of a work-piece 18. In this context, the Hall Effect sensor 16 does both the job of a typical magnetism sensor and that of a typical motion sensor, such as an optical sensor.

The sensors 16 should so arranged as to be of optimal use in detecting the proximity and position of the simulated welding rod 12, particularly *vis a vis* its position parallel to the work-piece 18.

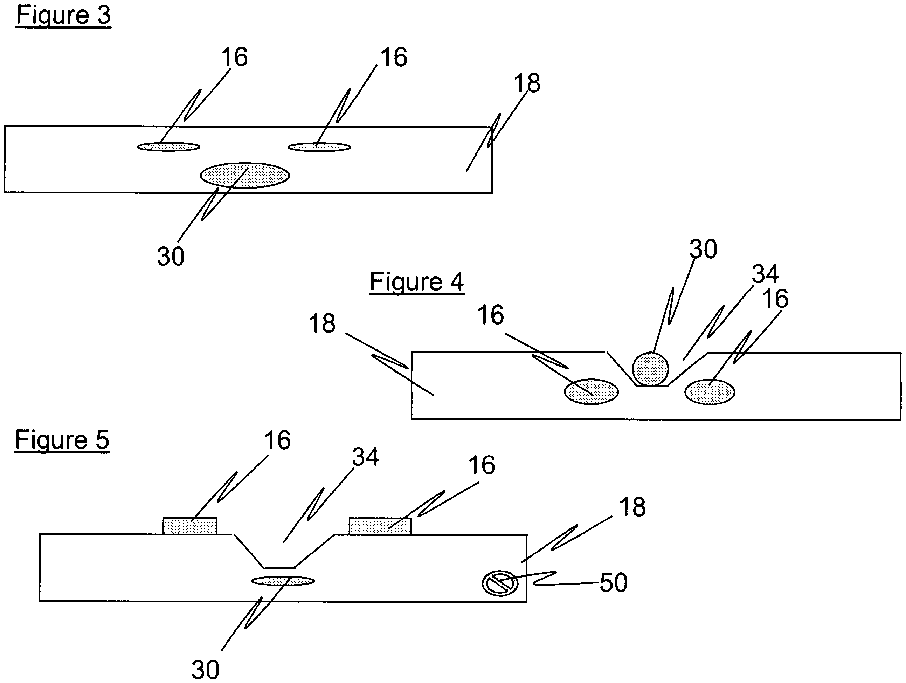

Figures 3 to 5 show various configurations of the work-piece 18. Figure 3 shows a work-piece 18 with both a sensor 16 and second magnet 30 embedded in it. This version has no indentation. Figure 4 shows another work-piece 18 with second magnet 30 located in indentation 34 and sensor 16 embedded in work-piece 18. Figure 5 shows another work-piece 18 with sensor 16 attached to its surface, and with second magnet 30 embedded in work-piece 18 below said indentation.

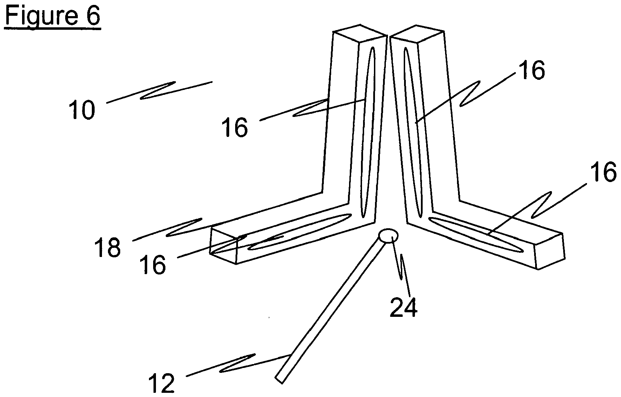

Figure 6 shows a welding simulator with a two piece work-piece 18. In order that proximity of rod 12 to all parts of the work-piece 18, the work-piece 18 is advantageously fitted with a variety of sensors 16. The skilled man will be able to experiment in order to find the optimal arrangement of sensors.

In all embodiments of the invention 10, there is featured a controller 40. The controller 40 is in communication with the sensor 16 and the electromagnet 24. This communication may take a wireless form, or it may be via a physical connection. In figure 1, the controller 40 is a computer running a simulation control programme. Other embodiments may have a dedicated hardware controller made for them.

Controller 40 receives information from the sensor 16 about the proximity of the simulated welding rod 12 to the simulated work piece 18, and adjusts the field strength and/or polarity of the electromagnet 24 in accordance with a predefined relationship between said proximity and said magnetic characteristics of field strength and/or polarity.

In this embodiment, the controller 40 will be equipped with one or more supplementary connectors in order to connect the controller to additional display means (not shown), for communicating information relating to the welding simulation, either in real time, as in on a changing screen, or as a document, generated, for example, by a printer.

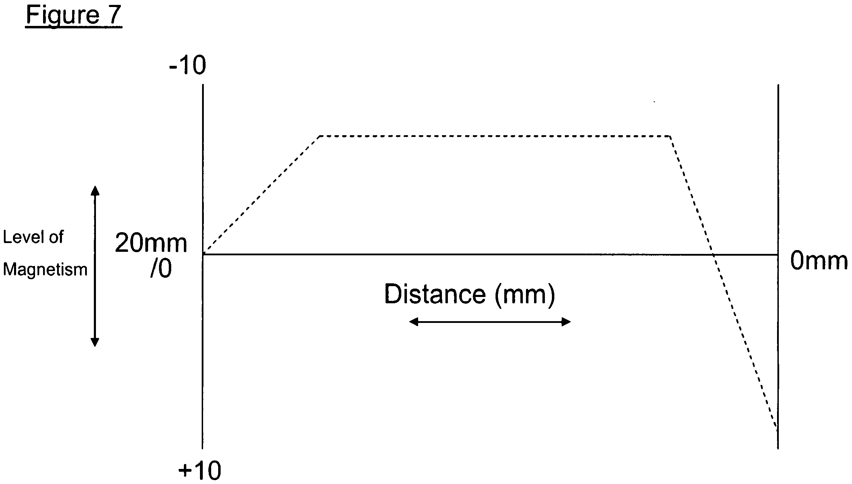

Figure 7 shows a graphic approximation of an example of a typical relationship between the proximity of the welding rod 12 to the simulated workpiece 18 and the magnetic characteristics of field strength and polarity to be generated by the electromagnet. The X axis plots the distance between a work-piece (not shown) and a simulated welding rod (also not shown), from 20 mm to 0 mm, while the Y axis charts attraction and repulsion, with -10 being strong repulsion and + 10 being strong attraction. We see that with a distance between them of approximately 20 mm, the magnets in the simulated work-piece and the welding rod begin to repel each other. The field strength may either be a constant, or be modulated by an oscillatory or pulsed waveform to mimic tactile sensations experienced in the welding environment. This might be expressed e.g. as a 50 Hz waveform to simulate stick welding, or a waveform of several kHz for MIG pulse welding. When the rod is moved closer to the work-piece, the repulsion will increase. If the rod is moved closer still, it will reach a plateau - that is to say, the repulsion will remain constant while this band of proximity is occupied. The plateau will notify the user that he has reached a band of proximity in which welding is optimal and will be able to practice learning the level of force required to keep the rod in position, and the degree of manual steadiness required in order to stop the rod from moving out of this band. Clearly, other simulations will involve movement parallel to the work-piece, in order to properly simulate, for example, the shape of an elongate weld. Here, sensors 16 will allow measurement of the rate at which the weld is undertaken. One different mode might modulate the tactile feedback given, in order to simulate the accumulation of material in one spot if the torch is left on that spot for too long.

At approximately 4 mm from the point at which the rod and work-piece would be in touching contact (i.e. 0 mm), the polarity of the electromagnet will reverse, thus creating an attractive force between rod 12 and work-piece 18. This may be expressed either by a constant tug or a pulsing tug. The communication of this tactile feedback, along with other information communicated by the optional display means will alert the user that they have left the desired position, and should act as a prompt for them to get back into it, in order to optimise their performance in the welding simulation.

Returning to figure 1, the controller 40 may be equipped with a number of modes (not shown), each mode corresponding with a different relationship between the proximity of the rod 12 to the work-piece 16 and field strength and/or polarity exhibited by the electromagnet. Such modes may be programmed to reflect particular conditions which one might find in a genuine welding scenario, such as variants of material, different electrode sizes, and different welding kit. Alternatively, modes may be programmed which differ from realistic scenarios, and aim to develop the hand-eye coordination of the welder, or the steadiness of his/her hand. Such modes may be pre-programmed or adjustable. They may be integral to the simulator 10, or be modular, offered, for example, as a software add-on.

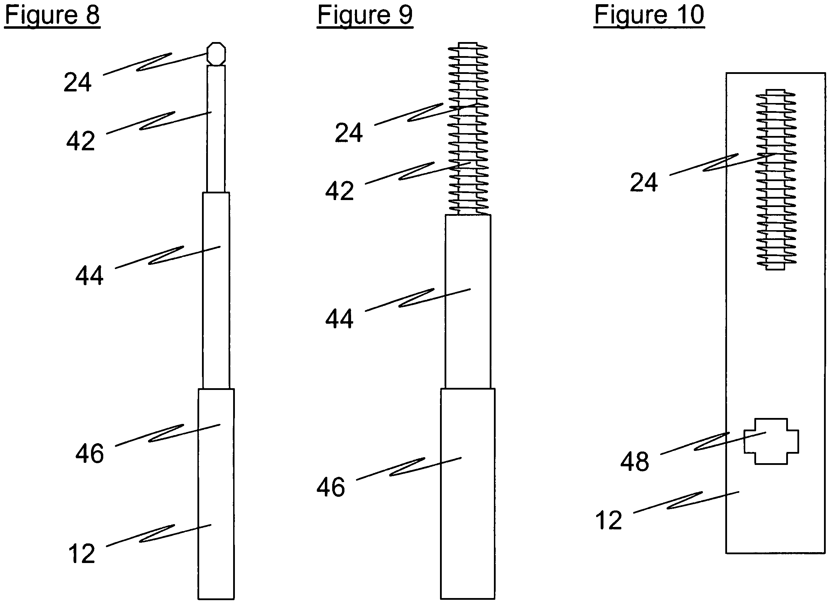

In figure 8 there is shown a rod 12, which has a telescopic function. It comprises three sections 42, 44, 46, each hollow at least in part. The purpose of the telescopic feature of the rod is that it mimics a consumable electrode. As the simulated weld progresses, the telescopic welding rod becomes shorter. Magnet 24 bearing first section 42 fits into second section 44, which in turn fits into third section 46, thus achieving the shortening effect. The shortening effect may be achieved in any manner appropriate and known to the skilled man such as a stepper motor, to draw the three sections 42, 44 and 46, together. Thus the user has to move the 12 toward a work-piece 18 at a predetermined rate in addition to dealing with the tactile feedback generated by the proximity of the first magnet 24 to the second magnet 30. This will enable the user to practice the motion which will enable him to feed the wire into the weld at the correct speed. In figure 8, first magnet 24 is a permanent magnet.

In figure 9, first magnet 24 is an electromagnet. It telescopes in the same manner as the embodiment in figure 8. Other methods of telescoping are also envisaged.

Figure 10 shows a rod 12, with an inclinometer 48. This can be used to measure the angle at which the rod 12 is held. There is a desirable angle at which such a rod 12 is held, and the extent to which this angle is achieved in a given simulation can be measured by inclinometer 48 and either displayed by inclinometer 48 or transmitted as data to controller 40, in which case it may be used in any useful manner.

In preferred embodiments, such as that shown in figure 1, means for storing data gathered from sensor 16 and optionally inclinometer 48 are further supplied. Such means will be well known to the skilled man and will likely be part of controller 40. A connection is provided between this and a data processor, which may also be part of controller 40. Said processing means will be able to recognise a period of time corresponding to a given welding simulation and will be capable of deriving one or more of the following data sets in relation to that period:
- the proximity of the end of the simulated welding rod with respect to the work-piece during the simulation.
- the arc current that would have been achieved in a corresponding arc welding apparatus;
- the arc voltage that would have been achieved in a corresponding arc welding apparatus;
- the velocity of the end of the simulated welding rod with respect to the work-piece during the simulation. A measurement of the forward velocity of the arc in relation to the weld is known as the travel speed
- the energy input (the "heat input") per unit length that would have been achieved in a corresponding arc welding apparatus.
- And in the case of embodiments comprising an inclinometer 48, the angle at which the rod 12 is held.

The practice of measuring or deriving these values is well known from literature such as "A look at heat input" (Funderbunk, R.S., Welding Innovation, Vol XVI, No.1, 1999). Factors such as the size of the electrode, the size of the arc and the nature of the parent material will also need to be taken into account when calculating these data sets.

Preferred embodiments of the invention such as the one shown in figure 5, feature a work-piece 18 further equipped with a microchip 50. This chip is of a known type chosen by the skilled man. The chip may be brought into communication with the controller (not shown) by means also known to the skilled man. The microchip 50 can be used to store, among others things, information to identify the parameters of the weld simulated by the work-piece, such as the length of the weld, the materials which are being used in the weld, both as electrode and base metal, and the type of weld being performed. This may be used to aid the production of particular types of data. Alternatively, an interface for inputting such parameters into the simulator may be provided.

Optionally, a supplementary optical recording device (not shown) may also be integrated into the training simulator, in order that a chosen simulation session may be recorded. In this embodiment, it is an externally placed video camera of a known type.

## Claims

1. An arc welding simulator (10), comprising a simulated welding rod (12), a simulated work-piece (18) and a controller (40), and characterised that:
the simulated welding rod (12) has a first magnet (24) at or towards one end;
the simulated work-piece (18) comprises a non-magnetic representation of an object to be welded, and one or more second magnets (30) located at or along a point, or
track (34), of intended weld simulation;
at least one of said first and second magnets (24,30) is an electromagnet;
the invention further comprises a sensor (16) to detect the proximity of the end of the simulated welding rod (12) to a surface of the simulated work-piece (18); and
the controller (40) is in communication with the sensor (16) and the or each electromagnet, and receives information from the sensor (16) about the proximity of the simulated welding rod (12) to the simulated work piece (18), and adjusts the field strength and/or polarity of the electromagnet (24, 30) in accordance with a predefined relationship between said proximity and said magnetic characteristics of field strength and/or polarity, thereby giving tactile feedback to a user.

2. An arc welding simulator (10) according to claim 1, wherein the controller (40) is equipped with a number of modes, each mode corresponding with a different relationship between the proximity of the simulated welding rod (12) to the simulated work-piece (18) and field strength and/or polarity exhibited by the electromagnet (24-30).

3. An arc welding simulator (10) according to either of claims 1 or 2, wherein the sensor (16) comprises means to detect the position of the simulated welding rod (12) parallel to a surface of the simulated work-piece (18).

4. An arc welding simulator (10) according to any preceding claim, wherein the sensor (16) comprises one or more sensors of magnetism.

5. An arc welding simulator (10) according to any preceding claim, wherein the sensor (16) comprises one or more Hall Effect sensors.

6. An arc welding simulator (10) according to any preceding claim, wherein the said second magnet (30) is set in or below an indentation in the work-piece (18).

7. An arc welding simulator (10) according to any preceding claim, wherein the dimensions of the indentation (34) are variable.

8. An arc welding simulator (10) according to any preceding claim, wherein the work-piece (18) is made, at least in part, of a flexible material.

9. An arc welding simulator (10) according to any preceding claim, further comprising means for storing data gathered from the sensor (16), and processing means for defining one or more periods of time as one or more simulations and deriving one or more of the following data sets in relation to that period:
the proximity of the end of the simulated welding rod (12) with respect to the simulated work-piece (18) during the simulation;
the arc current that would have been achieved in a corresponding arc welding apparatus;
the arc voltage that would have been achieved in a corresponding arc welding apparatus;
the velocity of the end of the simulated welding rod (12) with respect to the simulated work-piece (18) during the simulation;
the energy input per unit length that would have been achieved in a corresponding arc welding apparatus.

10. An arc welding simulator (10) according to any preceding claim, wherein the simulated welding rod (12) is telescopic.

11. An arc welding simulator (10) according to any preceding claim, wherein the simulated welding rod (12) further comprises an inclinometer (48).

## Patentansprüche

1. Lichtbogenschweißsimulator (10), umfassend einen simulierten Schweißstab (12), ein simuliertes Werkstück (18) und eine Steuerung (40), **dadurch gekennzeichnet, dass**
der simulierte Schweißstab (12) einen ersten Magneten (24) an einem Ende oder in der Nähe eines Endes hat;
das simulierte Werkstück (18) eine nicht-magnetische Verkörperung eines zu schweißenden Objekts umfasst und sich ein oder mehrere zweite Magneten (30) an einem oder entlang einem Punkt oder einer Spur (34) der beabsichtigten Schweißsimulation befinden;
mindestens einer der ersten und zweiten Magneten (24, 30) ein Elektromagnet ist;
die Erfindung des Weiteren einen Sensor (16) zur Erkennung der Nähe des Endes des simulierten Schweißstabs (12) zu einer Oberfläche des simulierten Werkstücks (18) umfasst; und
die Steuerung (40) mit dem Sensor (16) und dem oder jedem Elektromagnet kommuniziert und von dem Sensor (16) Informationen über die Nähe des simulierten Schweißstabs (12) zum simulierten Werkstück (18) empfängt und die Feldstärke und/oder Polarität des Elektromagneten (24, 30) entsprechend einer vordefinierten Beziehung zwischen der Nähe und den magnetischen Eigenschaften der Feldstärke und/oder Polarität angleicht, wodurch einem Benutzer ein haptisches Feedback gegeben wird.

2. Lichtbogenschweißsimulator (10) gemäß Anspruch 1, wobei die Steuerung (40) über eine Anzahl von Betriebsarten verfügt und jede Betriebsart einer anderen Beziehung zwischen der Nähe des simulierten Schweißstabs (12) zum simulierten Werkstück (18) und der durch den Elektromagneten (24-30) gezeigten Feldstärke und/oder Polarität entspricht.

3. Lichtbogenschweißsimulator (10) gemäß Anspruch 1 oder Anspruch 2, wobei der Sensor (16) Mittel zur Erkennung der Parallelposition des simulierten Schweißstabs (12) zu einer Oberfläche des simulierten Werkstücks (18) umfasst.

4. Lichtbogenschweißsimulator (10) gemäß einem der vorherigen Ansprüche, wobei der Sensor (16) einen oder mehrere Sensoren für Magnetismus umfasst.

5. Lichtbogenschweißsimulator (10) gemäß einem der vorherigen Ansprüche, wobei der Sensor (16) einen oder mehrere Hallsensoren umfasst.

6. Lichtbogenschweißsimulator (10) gemäß einem der vorherigen Ansprüche, wobei der zweite Magnet (30) in eine Einkerbung oder unterhalb einer Einkerbung in dem Werkstück (18) eingesetzt ist.

7. Lichtbogenschweißsimulator (10) gemäß einem der vorherigen Ansprüche, wobei die Abmessungen der Einkerbung (34) veränderlich sind.

8. Lichtbogenschweißsimulator (10) gemäß einem der vorherigen Ansprüche, wobei das Werkstück (18) zumindest teilweise aus einem flexiblen Material besteht.

9. Lichtbogenschweißsimulator (10) gemäß einem der vorherigen Ansprüche, des Weiteren umfassend Mittel zum Speichern von Daten, die von dem Sensor (16) erfasst wurden, und Verarbeitungsmittel zum Definieren von einem oder mehreren Zeitabschnitten als eine oder mehrere Simulationen und zum Gewinnen von einem oder mehreren der folgenden Datensätze in Bezug auf diesen Zeitabschnitt:
die Nähe des Endes des simulierten Schweißstabs (12) im Verhältnis zum simulierten Werkstück (19) während der Simulation;
der Lichtbogenstrom, der in einem entsprechenden Lichtbogenschweißapparat erzielt worden wäre;
die Lichtbogenspannung, die in einem entsprechenden Lichtbogenschweißapparat erzielt worden wäre;
die Geschwindigkeit des Endes des simulierten Schweißstabs (12) im Verhältnis zum simulierten Werkstück (19) während der Simulation;
die Energiezufuhr pro Längeneinheit, die in einem entsprechenden Lichtbogenschweißapparat erzielt worden wäre;

10. Lichtbogenschweißsimulator (10) gemäß einem der vorherigen Ansprüche, wobei der simulierte Schweißstab (12) teleskopartig ist.

11. Lichtbogenschweißsimulator (10) gemäß einem der vorherigen Ansprüche, wobei der simulierte Schweißstab (12) einen Neigungsmesser (48) umfasst.

## Revendications

1. Un simulateur de soudage à l'arc (10), comportant une baguette de soudage simulée (12), une pièce à souder simulée (18) et un contrôleur (40), et **caractérisé en ce que** :
la baguette de soudage simulée (12) a un premier aimant (24) à ou vers une extrémité ;
la pièce à souder simulée (18) comporte une représentation non magnétique d'un objet devant être soudé, et un ou plusieurs deuxièmes aimants (30) situés à ou le long d'un point, ou trajectoire (34), de simulation de soudure voulue ;
au moins un desdits premier et deuxième(s) aimants (24, 30) est un électroaimant ;
l'invention comporte de plus un détecteur (16) pour détecter la proximité de l'extrémité de la baguette de soudage simulée (12) par rapport à une surface de la pièce à souder simulée (18) ; et
le contrôleur (40) est en communication avec le détecteur (16) et le ou chaque électroaimant, et reçoit des informations du détecteur (16) sur la proximité de la baguette de soudage simulée (12) par rapport à la pièce à souder simulée (18), et règle l'intensité de champ et/ou la polarité de l'électroaimant (24, 30) conformément à une relation prédéfinie entre ladite proximité et lesdites caractéristiques magnétiques de l'intensité de champ et/ou de la polarité, donnant ainsi un retour tactile à un utilisateur.

2. Un simulateur de soudage à l'arc (10) selon la revendication 1, dans lequel le contrôleur (40) est équipé de plusieurs modes, chaque mode correspondant à une relation différente entre la proximité de la baguette de soudage simulée (12) par rapport à la pièce à souder simulée (18) et l'intensité de champ et/ou la polarité montrée par l'électroaimant (24-30).

3. Un simulateur de soudage à l'arc (10) selon l'une quelconque des revendications 1 ou 2, dans lequel le détecteur (16) comporte un moyen pour détecter la position de la baguette de soudage simulée (12) parallèle à une surface de la pièce à souder simulée (18).

4. Un simulateur de soudage à l'arc (10) selon n'importe quelle revendication précédente, dans lequel le détecteur (16) comporte un ou plusieurs détecteurs de magnétisme.

5. Un simulateur de soudage à l'arc (10) selon n'importe quelle revendication précédente, dans lequel le détecteur (16) comporte un ou plusieurs capteurs à effet Hall.

6. Un simulateur de soudage à l'arc (10) selon n'importe quelle revendication précédente, dans lequel ledit deuxième aimant (30) est placé dans ou au-dessous d'une dentelure dans la pièce à souder (18).

7. Un simulateur de soudage à l'arc (10) selon n'importe quelle revendication précédente, dans lequel les dimensions de la dentelure (34) sont variables.

8. Un simulateur de soudage à l'arc (10) selon n'importe quelle revendication précédente, dans lequel la pièce à souder (18) est fabriquée, au moins en partie, avec une matière flexible.

9. Un simulateur de soudage à l'arc (10) selon n'importe quelle revendication précédente, comportant de plus un moyen pour stocker les données collectées à partir du détecteur (16), et un moyen de traitement pour définir une ou plusieurs périodes de temps comme une ou plusieurs simulations et dériver un ou plusieurs des ensembles de données suivants par rapport à cette période :
la proximité de l'extrémité de la baguette de soudage simulée (12) par rapport à la pièce à souder simulée (18) durant la simulation ;
le courant d'arc qui aurait été obtenu dans un appareil de soudage à l'arc correspondant ;
la tension de l'arc qui aurait été obtenue dans un appareil de soudage à l'arc correspondant ;
la vitesse de l'extrémité de la baguette de soudage simulée (12) par rapport à la pièce à souder simulée (18) durant la simulation ;
l'énergie mise en jeu par longueur d'unité qui aurait été obtenue dans un appareil de soudage à l'arc correspondant.

10. Un simulateur de soudage à l'arc (10) selon n'importe quelle revendication précédente, dans lequel la baguette de soudage simulée (12) est télescopique.

11. Un simulateur de soudage à l'arc (10) selon n'importe quelle revendication précédente, dans lequel la baguette de soudage simulée (12) comporte de plus un inclinomètre (48).
